(19) **Europäisches Patentamt**
**European Patent Office**
**Office européen des brevets**

(11) **EP 2 359 619 B1**

(12) **EUROPEAN PATENT SPECIFICATION**

(45) Date of publication and mention
of the grant of the patent:
**03.01.2018 Bulletin 2018/01**

(51) Int Cl.:
***H04W 74/04*** *(2009.01)*

(21) Application number: **09846683.2**

(22) Date of filing: **30.06.2009**

(86) International application number:
**PCT/CN2009/072562**

(87) International publication number:
**WO 2011/000154 (06.01.2011 Gazette 2011/01)**

(54) **METHOD AND APPARATUS OF COMMUNICATION**

KOMMUNIKATIONSVERFAHREN UND -VORRICHTUNG

PROCÉDÉ ET APPAREIL DE COMMUNICATION

(84) Designated Contracting States:
**AT BE BG CH CY CZ DE DK EE ES FI FR GB GR
HR HU IE IS IT LI LT LU LV MC MK MT NL NO PL
PT RO SE SI SK TR**

(43) Date of publication of application:
**24.08.2011 Bulletin 2011/34**

(73) Proprietor: **Huawei Technologies Co., Ltd.
Longgang District
Shenzhen, Guangdong 518129 (CN)**

(72) Inventors:
• **YANG, Xuejun**
**Shenzhen (CN)**
• **OLOFSSON, Henrik**
**Shenzhen (CN)**
• **JOHANSSON, Johan**
**Shenzhen (CN)**

• **WANG, Xuelong**
**Shenzhen (CN)**

(74) Representative: **Isarpatent
Patent- und Rechtsanwälte Behnisch Barth
Charles
Hassa Peckmann & Partner mbB
Postfach 44 01 51
80750 München (DE)**

(56) References cited:
**EP-A1- 1 406 418         EP-A1- 1 909 523
WO-A1-03/036815         WO-A1-2009/022948
WO-A1-2009/065075       WO-A1-2009/120934
CN-A- 101 150 864       CN-A- 101 243 619
US-A1- 2007 042 784     US-A1- 2008 247 375**

## Description

## Technical field

The technical field of signaling exchange of transmit-parameter value, such as transmission power level, or associated change communication exchange provides relevant art of technology for this specification of an invention. This may also be the case for a technical field of e.g. radio coverage planning, load balancing or interference control in a cellular wireless communications system.

## Background

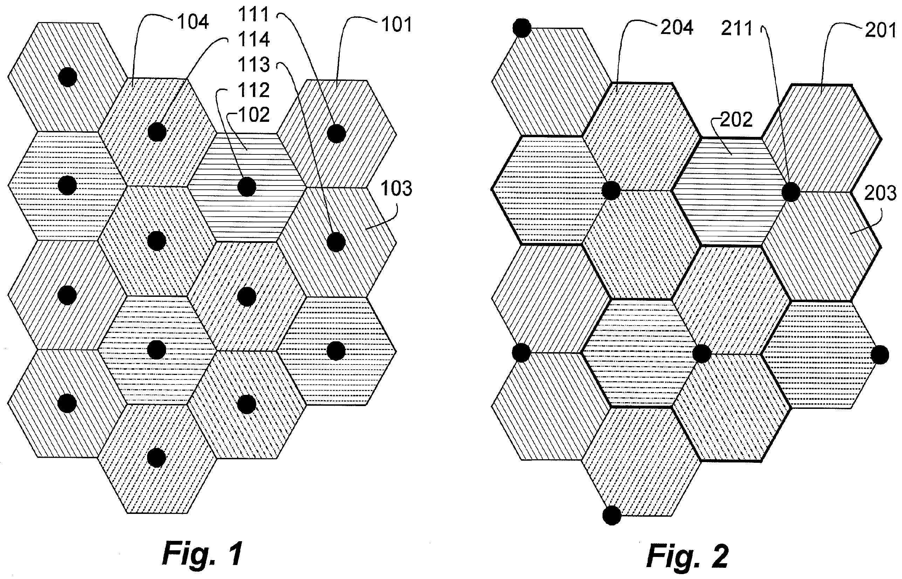

A wireless communications system being cellular provides a means of covering a surface with wireless communications resources. A surface to be covered by wireless services is divided into a number of smaller areas, cells, each cell being served by one or more base stations. With a great number of base stations, BSes, each base station providing services for a corresponding cell of service coverage, a great surface is covered. In e.g. UMTS ('Universal Mobile Telecommunication System') and UTRA ('Universal Terrestrial Radio Access'); the logical concept or representation of a base station is referred to as Node B; and in E-UTRA, E-UTRAN Node B or eNB. In WiMAX ('Worldwide Interoperability for Microwave Access'), it is referred to as enhanced base station; and in WiFi and Wireless LAN ('Local Area Network') systems, it is referred to as access point, AP. In case a wireless resource, such as radio frequency spectrum, is used repeatedly in more than one cell, a great service area can be covered also with a limited amount of the wireless resource. For a cellular wireless communications system, transmission power in each cell need be determined. It may be carefully planned considering expected traffic distribution and wireless channel propagation conditions influenced by various objects in nature (e.g. mountains, trees or lakes) or as planned in the physical environment (e.g. buildings) or moving objects (e.g. cars and busses). Transmission power may also be set on a less predetermined or even random basis. Transmission power is one factor that impacts user equipment's received power. Other factors are location, positioning and type of antenna or antennas, particularly for the base station but also for the user equipment, UE, receiving the signals. Figure 1 illustrates a basic cellular system where each base station (111-114) is serving a single cell (101-104) anticipating an omni-directional antenna coverage. Figure 2 illustrates a basic cellular system where each base station (211) is serving three cells (201-203). Some systems denotes for a similar topology as having a base station in a "corner" of each served cell, when coverage footprint is not omni-directional, and where a site comprises the base stations of a same "corner" location, where base station "corners" coincide. For both figures 1 and 2, each cell may be covered by a single base station antenna or a plurality of base station antennas. In figures 1 and 2 each cell is illustrated by a hexagonal (101-104, 201-204). In a real environment, the cell coverage depends on factors as shadowing objects, reflection, diffraction and bending of propagating electromagnetic waves due to objects, as already mentioned. Most real communication networks therefore have more or less overlapping coverage areas of the various cells, also allowing for a handover region. Figure 1 schematically illustrates an overlap situation where user equipment; terminal, client, user or user equipment device; or subscriber or mobile station (31, 32) in the sequel collectively referred to as user equipment; UE; is capable of detecting signals of more than one cell (33, 34). In the illustrated figure the cells (33, 34) are covered by different base stations (35, 36). This does not exclude that the base stations are co-located or that multiple cells are covered by a same base station (c.f. figure 2).

3GPP TS 05.08 V7.7.0, Technical Specification Group GSM/EDGE Radio Access Network; France, August 2001, specifies that a BCCH ('Broadcast Control Channel') signal in GSM/EDGE shall be continuously transmitted on all time-slots and without variation of RF level.

Helmut Keller, Burkhard Braach, 'Radiation exposure due to UMTS,' April 2006, describes frequency and code selective measurements of constant power level channels in GSM and UMTS. At least one channel per base station in GSM and UMTS networks outputs at a constant known power level. This is the BCCH (Broadcast Control Channel) in GSM and the P-CPICH (Primary Common Pilot Channel) in UMTS.

M.A.R. Haider, A.B. Bhatti, A.A. Kirmani, 'Radio Resource Management In 3G UMTS Networks,' Blekinge Institute of Technology, November 2007, explore some RRM techniques and analyze two power control algorithms. In Open loop power control, UE examines the received power level measurements of Common Pilot Channel, CPICH, to set its initial power level. The power of received pilot signal reduces as distance between UE and Node B increases, and increases as distance between UE and Node B decreases. Node B transmits power control information on the broadcast channel, which gives the actual transmitted power information of the CPICH from Node B, because UE cannot retrieve any information of actual transmitted power of received pilot signal from the analysis of CPICH. With the help of this information, a UE device can estimate the path loss and thus it can estimate the distance from the Node B and power required to transmit the signal from that UE. This estimation of initial power settings in uplink and downlink direction based on path loss calculations in downlink direction is denoted open loop power control. In the case of uplink open loop power control, UE measures the Received Signal Code Power, RSCP, of the active Primary Common Pilot Channel, P-CPICH, and some control parameters transmitted by Node B on broadcast channel. Then, UE sets the transmit power of first Physical Random Access Channel, PRACH, preamble.

S. Sharma, A.R. Nix and S. Olafsson, 'Situation-Aware Wireless Networks,' IEEE Communications Magazine, July 2003, discusses the task of implementing a dynamic planning tool for wireless networks. A self-organizing network is a system that responds to its environment autonomously, detecting external conditions and reacting appropriately. Situation awareness is physical layer functionality. It provides the base station with local knowledge of the current state of the network based on observations of its surroundings and is acquired through use of logical sensors. A model referred to has three levels, where the first level involves perception of elements in the environment, the second level involves comprehension of the current state and the third level involves the projection of future status and is essentially an evaluation function.

For the model's first level, a base station is required to detect the relevant geographical attributes and dynamics in its vicinity. This could involve detection of peers, establishing mean path loss or extra capacity available. According to the model's second level, the base station must determine the nature of the perturbation in its environment, and at the model's third level, the base station is required to initiate corrective action based on its assessment of the situation, and the best option is selected on the basis of the minimal negative impact it has on the whole system.

The improvements made in handset technology now offer operators the potential to develop a huge distributed network monitoring system. This leads to the possibility of adapting coverage as a function of change in the network environment or load profile.

S. Sharma, E. Tameh, A. Molina and A.R. Nix, 'Automated W-CDMA Microcellular Deployment and Coverage Reconfiguration based on Situation Awareness,' IEEE VTC Spring 2002, Birmingham, UK, May 6-9, 2002, examines the implementation of an automated WCDMA microcellular deployment and coverage reconfiguration algorithm based on Situation Awareness, SA. The SA algorithm automatically reconfigures a WCDMA network's coverage and capacity through the use of a genetic algorithm, GA. The SA algorithm detects the impact of geographic evolutions and engages the GA to calculate new base station transmit power-levels to remedy the situation. Outage probability rises much faster when the SA algorithm is not used to compensate for changes in the local environment. For a microcellular environment, predicting and achieving geographic coverage depends on site specific parameters such as building locations and local terrain features. The objective, to maximize capacity and minimize outage probability and blockage, is achieved by finding optimum values of downlink transmit powers at the base stations, thereby maintaining a target Grade of Service, GoS in the network. The GoS is determined as the sum of outage probability and blocking probability. GoS values versus system load are provided for various traffic situations, and it is concluded that the ability of the base stations to monitor changes in propagation conditions allows the network to efficiently self adapt. The coverage needs be re-evaluated periodically and this could be performed using location aware mobile terminals that report their RSSI ('Received Signal Strength Indicator') levels to the surrounding base stations.

S. Sharma and A.R. Nix, 'Situation Awareness Based Automatic Basestation Detection and Coverage Reconfiguration in 3G Systems,' IEEE PIMRC 2002, Lisbon, Portugal, Sept. 15-18, 2002, studies how cells of a cellular radio communications system can detect the presence of new base stations and adapt their coverage accordingly and discusses Self-Organization as one technique that can organize future wireless networks and make them more adaptive. The ability to deploy self-organized networks then depends on the extent that base stations can be made situation aware. This involves making base stations aware of their surroundings, e.g. location of neighboring base stations or building structures, so that they may react to imbalances due to changes in the propagation environment or the traffic level within the network. The pilot channel is a downlink channel that is used by the base station to send control signals to mobile station for new call admissions and soft handover control. This beacon channel defines the cell radius and is controlled to reshape the network area. Variations in the beacon power setting are used to reconfigure the network whenever a new base station is detected. The pilot channel transmission power is calculated for a particular energy to interference ratio Ec/10 at a distance equal to the cell radius.

J.X. Qiu and J.W. Mark, 'A Dynamic Load Sharing Algorithm Through Power Control in Cellular CDMA,' IEEE PIMRC 1998, Boston, MA, USA, 15-18 Sept. 1998, investigates an algorithm that dynamically maximizes CDMA capacity usage by adjacent cell load sharing. When energy to noise ratio Eb/N0 decreases below a threshold, the base station starts directing some subscribers to less loaded surrounding cells by lowering the pilot signal power, thus shrinking the cell size and increasing the total number of subscribers that the network system can handle. The pilot power is reduced at a predefined pace. When the pilot signal has been decreased to a minimum value, any further new user connection requests and handoff requests from neighboring cells will be refused to guarantee sufficient overlap between adjacent cellular areas to conduct soft handoff. When Eb/N0 is larger than the threshold, the pilot power increases step-wise until it reaches a nominal value. The algorithm relies upon power measurement process already expected to be implemented in mobile devices and a feedback control system needed to adjust the pilot power according to interference level.

A.G. Spilling and A.R. Nix, 'An Introduction to Situation Aware Networks,' IEEE VTC Spring 2000, May 15-18, 2000, applies situation awareness to cellular networks. An SA enabled base station and input parameters are illustrated. The following parameters are monitored:

- Propagation environment;

- Services provided (voice, video, data, online shopping);

- Traffic intensity, and variation thereof;

- Network changes - newly inserted base stations, congested base stations, failed base stations.

As regards the network changes, all base stations are reporting their loading levels. The base stations are additionally proposed to include transmit power to a broadcast list transmitted on their broadcast control channel to enable mobile terminal to connect to the correct base station, including base station identity, and additionally also transmit power. The added information enables the system to calculate the path loss between itself and its neighbors. This enables the base station to compute how much it need increase (or decrease) its beacon transmit power to obtain the desired coverage. The information also enables the base stations to adapt their coverage intelligently when base stations are inserted or removed from the network.

A.G. Spilling and A.R. Nix, 'Performance enhancement in cellular networks with dynamic cell sizing,' IEEE PIMRC 2000, London Sept. 18-21, 2000, Feb. 2001, investigates capacity improvements with dynamic cell sizing for different user distributions. It is concluded that in uniform traffic conditions, dynamic cell sizing provides very little additional capacity. On the other hand, when the traffic is normally distributed in the cell, the authors' conclusion is that dynamic cell sizing perform well also when a hot spot is not co-located with the base station.

I. Siomina and D. Yuan, 'Optimization of Pilot Power for Load Balancing in WCDMA Networks,' IEEE Globecom 2004, Nov. 29-Dec. 3, 2004, allocates 4 to 10% of total power available at base station to CPICH. Cell load balancing is designed to maximize capacity ratio of cells of the cellular system. Each cell is divided into a plurality of bins. The pilot power of a particular cell is set to cover bins for which the cell has the best power gain out of all possible cells, assuming signal propagations being the same across a bin. The power gains are predicted values for a specific network configuration including path loss and shadowing (slow fading) components. One observation is that capacity ratio greatly varies over the cells. Thus even for optimized pilot power, there are cells that need serve much more traffic than others. The capacity ratio of optimized pilot power setting significantly improves that of uniform pilot power setting for the given simulation.

A. Amphawan and E.M. Abraham G., 'Dynamic Cell Sizing in CDMA Networks,' Pakistan Journal of Information and Technology, 2002, analyzes the impact of non-uniform traffic distribution in different cells during peak hours and looks into how dynamic cell sizing mechanism performs load balancing under non-uniform traffic distribution during peak hours by moving forward link handoff boundary within a soft handoff region of a CDMA system, when reverse link traffic load increases corresponding to Qiu and Mark, 1998. Mobile stations detecting a pilot signal above an add threshold reports the pilot to the base station and the pilot is included in a set of pilots referred to an active set. Pilots below a drop threshold, not greater than the add threshold are excluded from the active set. By cell-sizing, some of the mobiles in a lightly loaded cell which were in soft handoff with a heavily loaded cell will go out of soft handoff with that cell. The reduction of soft handoff area results in reduction of the number of soft handoff links that the heavily loaded cell must support. In consequence, the capacity on the forward link capacity may be increased. Also the relative amount of transmit power spent on overhead reduces and overhead traffic reduces corresponding to a capacity increase. Since the soft handoff region is reduced, reliability may also reduce. Amphawan et al. conclude that conflict may arise when a heavily loaded cell is placed adjacent to another heavily loaded cell. In order to minimize negative impact of cell sizing on call quality, the amount of cell sizing attenuation must be limited and carefully controlled.

International Patent Application WO03036815, discloses a method for controlling a network of a WCDMA system. To calculate the load, each cell may collect statistics of its total transmission power. At regular intervals, the cell asks its neighbor cells for the values of their respective power statistics. From the collected information, the cell can then calculate its load and categorize it as significantly lower than, not significantly different from, or significantly higher than the load in adjacent cells, and the CPICH power level can be adjusted.

US Patent US7162250, pertains to a load balancing method and system based on dynamic transmission power adjustment of access points, APs. When an overloaded access point reduces its coverage area, it forces some wireless client devices that were earlier within its footprint, but no longer are within its coverage area, to attach to alternative access points. Similarly, when an underloaded access point increases its coverage area, it provides an opportunity to wireless devices, which were earlier outside its footprint, but now within the expanded coverage area, to switch attachment to this access point, AP. By changing the AP to which a wireless device attaches, the load-levels on the individual APs are indirectly changed. The system allows for independent power adjustment by individual APs, and without any centralized coordination. An access point that is experiencing significant overload may simply decide to decrease its cell size, and request its neighbors to increase their coverage area to pick up the resulting slack. Each AP may do this in a completely asynchronous and un-synchronized manner, with only a limited amount of localized signaling, using the wired network. Each AP essentially queries its neighboring APs to determine if it can and should change its power level. This approach uses localized load balancing. Thus, each AP must first determine if it is in position to either increase or decrease its transmission power (and thus, its coverage area). To determine this, each AP first obtains its current performance metrics, such as the number of attached users of traffic rates, and compares it against some thresholds. As a result of this computation, the AP is able to decide if it is currently in an overloaded state (and hence, needs to reduce its power level), or an underloaded state (and hence, can increase its power level if required to by some neighboring AP) or in an operating range where it should continue to maintain its current transmission power level. If the AP is in an underloaded state, it then queries its neighboring APs to see if any of them is overloaded and would like to transfer some load to it. After obtaining this information, the access point determines if it should increase its area of coverage. If this underloaded access point has an overloaded neighboring AP, then the embodiment works by having the underloaded AP increase, and one or more of the overloaded neighboring APs reduce, its transmission power. After completing this process, the AP waits for a specified interval before iterating the process. If the AP is in an overloaded state, it queries its neighboring APs to see if any of them are in an underloaded state and can increase their coverage area. If such underloaded neighbors are found, the system then requires the overloaded AP to decrease, and one or more of its underloaded neighboring APs to increase their transmission power prior to initiating the process again. In case AP is neither underloaded nor overloaded, it simply waits for a specified interval before obtaining load levels and performance metrics to compare against configured thresholds, and iterating the process.

US Patent Application US2005265222, relates to a method for minimizing inter-cell interference in digital radio cellular communication systems employing multi-carrier transmission techniques, such as orthogonal frequency division multiplexing.

When a terminal, according to US Patent Application No. US2005265222 moves from an inner cell region of a serving cell of the radio communications system to the border cell region of said cell and in the direction of a neighbor cell, the terminal measures pilot signals from interfering neighbor cells in that region and reports to the mobile radio network information about the strength of reception from these cell pilot signals. Based on the terminal information and network criteria, the mobile radio network assigns to the terminal time-frequency patterns of the time-frequency group with which said neighbor cell emits with limited power.

International Patent Application WO2004019538, refers to power control methods and apparatus for use in a sectorized cell of an OFDM communications system. Each sector of a cell uses the same frequencies and transmission times and is synchronized with the other sectors in the cell in terms of tone frequencies used at any given time and symbol transmission times. Tones are allocated to channels in each cell in the same manner so that each channel in a sector has a corresponding channel in another sector. Different channels are assigned different power levels. The terminal estimates its channel condition characteristics and notifies the base station. The base station's scheduler may use the reported channel condition characteristics of the wireless terminals including power information, signal strength, and SIR to match wireless terminals to appropriate channels in each sector. Decisions on providing additional power or allocating segments for a wireless terminal to a channel having high power can be made based on the indication of inter-sector interference relative to other interference. Wireless terminals which can benefit from higher transmission power can be allocated to high power channels. Assignment of high power channel segments can be used to load balance the system, improve or optimize system performance and/or increase throughput capability by evaluating and reducing inter-sector and inter-cell interference.

3rd Generation Partnership Project, Technical Specification Group Radio Access Network; Evolved Universal Terrestrial Radio Access (E-UTRA); Physical Channels and Modulation, 3GPP TS 36.211 V8.6.0, France, March 2009, defines three types of downlink reference signals of an example LTE system:

- Cell-specific reference signals, associated with non-MBSFN ('MBMS Single Frequency Network', 'Multimedia Broadcast Multicast Service Single Frequency Network') transmission;

- MBSFN reference signals, associated with MBSFN transmission; and

- UE-specific reference signals.

There is one reference signal transmitted per downlink antenna port.

Cell-specific reference signals shall be transmitted in all downlink sub-frames in a cell supporting non-MBSFN transmission. In case the sub-frame is used for transmission with MBSFN, only the first two OFDM ('Orthogonal Frequency Division Multiplex') symbols in a sub-frame can be used for transmission of cell-specific reference symbols. Cell-specific reference signals are transmitted on one or several of antenna ports 0 to 3.

MBSFN reference signals shall only be transmitted in sub-frames allocated for MBSFN transmissions. MBSFN reference signals are transmitted on antenna port 4.

UE-specific reference signals are supported for single-antenna-port transmission of PDSCH ('Physical Downlink Shared Channel') and are transmitted on antenna port 5. The UE is informed by higher layers whether the UE-specific reference signal is present and is a valid reference for PDSCH demodulation or not. UE-specific reference signals are transmitted only on the resource blocks upon which the corresponding PDSCH is mapped.

3rd Generation Partnership Project, Technical Specification Group Radio Access Network; Evolved Universal Terrestrial Radio Access (E-UTRA); Physical layer - Measurements, 3GPP TS 36.214 V8.6.0, France, March 2009, describes in section 5.1 UE measurement capabilities. For E-UTRA networks, a UE measures two parameters on reference signal: RSRP ('Reference Signal Received Power') and RSRQ ('Reference Signal Received Quality').

3rd Generation Partnership Project, Technical Specification Group Radio Access Network; Evolved Universal Terrestrial Radio Access (E-UTRA); Physical layer procedures, 3GPP TS 36.213 V8.6.0, France, March 2009, describes downlink power control and energy per resource element, EPRE. For an example LTE system, the term resource element energy denotes an average energy taken over all constellation points for a modulation scheme as applied. A UE may assume downlink cell-specific RS EPRE ('Reference Signal EPRE') is constant across the downlink system bandwidth and constant across all sub-frames until different cell-specific RS power information is received. The downlink reference-signal EPRE can be derived from the downlink reference-signal transmit power given by the parameter Reference-signal-power provided by higher layers. The downlink reference-signal transmit power is defined as the linear average over the power contributions (in [W]) of all resource elements that carry cell-specific reference signals within the operating system bandwidth.

3rd Generation Partnership Project, Technical Specification Group Radio Access Network; UTRAN Iur interface RNSAP signalling, 3GPP TS 25.423 V8.3.0, France, December 2008, discusses Radio Link Setup procedure of an example WCDMA system. When an SRNC ('Serving Radio Network Controller') makes an algorithmic decision to add a first cell or set of cells from a DRNS ('Drift Radio Network Subsystem') to the active set of a specific UE ('User Equipment')-UTRAN ('Universal Terrestrial Radio Access Network') connection, the RADIO LINK SETUP REQUEST message is sent to the corresponding DRNC ('Drift Radio Network Controller') to request establishment of the radio link(s). The Radio Link Setup procedure is initiated with this RADIO LINK SETUP REQUEST message sent from SRNC to DRNC.

The DRNC shall include in the RADIO LINK SETUP RESPONSE message the Neighbouring FDD Cell Information IE and/or Neighbouring TDD Cell Information IE in the Neighbouring UMTS Cell Information IE for each neighboring FDD cell and/or TDD cell respectively. In addition, if the information is available, the DRNC shall include in the RADIO LINK SETUP RESPONSE message the Frame Offset IE, Primary CPICH Power IE, Cell Individual Offset IE, STTD Support Indicator IE, Closed Loop Model Support Indicator IE, Coverage Indicator IE, Antenna Co-location Indicator IE and HCS Prio IE in the Neighbouring FDD Cell Information IE, and the Frame Offset IE, Cell Individual Offset IE, DPCH Constant Value IE, the PCCPCH Power IE, Coverage Indicator IE, Antenna Co-location Indicator IE and HCS Prio IE in the Neighbouring TDD Cell Information IE or the Neighbouring TDD Cell Information LCR IE.

Upon receipt of the RADIO LINK SETUP REQUEST message, the DRNS shall reserve the necessary resources and configure new RL(s) ('Radio Link(s)') according to the parameters given in the message. For FDD ('Frequency Division Duplex') mode, if the RADIO LINK SETUP REQUEST message includes the DL Power Balancing Information IE and the Power Adjustment Type IE is set to "Common" or "Individual", the DRNS shall activate the power balancing, if activation of power balancing by the RADIO LINK SETUP REQUEST message is supported, using the DL Power Balancing Information IE. If the DRNS starts the DL ('Down Link') transmission and the activation of the power balancing at the same CFN ('Connection Frame Number'), the initial power of the power balancing i.e. Pinit shall be set to the power level indicated by the Initial DL TX Power IE (if received) or the decided DL TX power level on each DL channelization code of a RL based on the Primary CPICH Ec/N0 IE or the Enhanced Primary CPICH Ec/N0 IE.

The purpose of power balancing is to keep the output power of each base station in the active set the same within an error margin. An active set of a UE is the set of one or more Nodes B the UE is simultaneously connected to (i.e., a set of cells currently assigning a downlink to the UE). Measurement requests are sent from the RNC to each base station in the active set. Each base station sends in reply measurement reports containing downlink power measurement for the specific radio link.

3rd Generation Partnership Project, Technical Specification Group Radio Access Network; Physical layer procedures (FDD),' 3GPP TS 25.214 V3.5.0, France, December 2000, presents in appendix B.3 an algorithm for power balancing in WCDMA, in case of soft handover. UTRAN may then employ downlink radio link, i, power balancing, that tries to balance the radio link powers, P(i), towards reference power, PREF. The UTRAN access point radio link transmission power is adjusted by the power balancing term Pbal(i) [dB] which is calculated according to the following equation:

$$\mathrm{Pbal(i)} = \mathrm{sign}\{(1-r)(\mathrm{PREF}-\mathrm{P(i)})\} \times \min\{\,|(1-r)(\mathrm{PREF}-\mathrm{P(i)})|\,,\,\mathrm{Pbal,max}\};$$

including: Pbal(i): radio link power balancing control in dB; sign{x}: sign function of the value x, i.e. +1 when x>0, 0 when x=0, and -1 when x<0; r: convergence coefficient (0≤r≤1); PREF: reference transmission power in dBm; Pbal,max: maximum power change limit for radio link power balancing control in dB.

The actual transmission power level shall be a value which is the nearest allowed power level to P(i). The parameters PREF, and Pbal,max are signaled by higher layers. Pbal,max shall be a multiple of the power control step size ΔTPC dB.

WO 2009/065075 describes techniques for combating high interference in a dominant interference scenario. A terminal may observe high interference from an interfering base station in a dominant interference scenario. High interference may be combated by reserving time intervals for a serving base station.

EP 1 406 418 A1 discloses a mobile communication system for reducing interferences in uplinks and downlinks. A cell controller acquires the cell control information transmitted by mobile station and sets up a transmitted power level based on the acquired information.

WO 2009/120934 A1 discloses a technique for mitigating interferences in a wireless communication network. An interfering base station can select an appropriate frequency resource and an appropriate transmission level based on information received from a terminal.

WO 2009/022948 A1 discloses that reference symbol transmitted power information is exchanged over X2 interface between eNodeBs in E-UTRAN.

**Summary**

Cited prior art of technology focuses on centralized load balancing, unsynchronized load balancing, interference reduction due to frequency allocation, centralized power balancing, unsynchronized power balancing and communication of power levels over user equipment - base station air-interface(s). In the future, it will likely not be feasible to load an air-interface with overhead not requiring communication over the air-interface. Further, with increased independency of base stations, centralized power balancing becomes less advantageous to be performed dynamically. Also, without synchronization of balanced power levels between different cells, connection allocation and connection quality of user equipment in the various cells may not be controlled to an extent providing satisfactory performance. In addition, the experience of soft handover from, particularly, CDMA ('Code Division Multiple Access') and WCDMA ('Wideband CDMA') systems have disclosed some difficulties, for which hard handover may be preferred also in future packet switched communication systems, not excluding LTE ('Long Term Evolution') or WiMAX ('Worldwide Interoperability for Microwave Access') systems.

Prior art of technology as cited does not disclose or suggest a method or equipment efficiently providing or synchronizing the required information of one or more cells, particularly not in a fashion suitable also for a communications system with distributed radio network control.

Consequently, it is an object of a preferred embodiment of the invention to exchange one or more transmit parameter values, such as one or more transmit power levels, between cells served by one or more base stations of wireless transmission, at least one of them according to the one or more transmit parameter values, e.g., in a distributed wireless system or wireless system of flat network topology.

Also, it is an object of example embodiments of the invention to provide for acquisition of UE measurement data and enrich the usefulness of such data while eliminating or minimizing load increase of air-interface(s) between UE and base station(s).

A further object of an example embodiment is to provide means of load balancing or interference control of distributed control.

Another object of embodiments of the invention is to provide reliable service levels of a system relying upon hard handover decisions or connections over a single (bi-directional) communications link.

Additionally, it is an object of an embodiment of the invention to provide for dynamic balancing of cell wireless coverage of various cells of a cellular wireless system, such as radio coverage of a radio communications system.

The invention provides method and equipment of transmit parameter management, such as power level management of a cell reference signal of a cellular communications system, as described in detail below.

**Brief description of the drawings**

Figure 1 illustrates a basic cellular system where each base station is serving a single cell according to prior art.

Figure 2 illustrates a basic cellular system where each base station is serving three cells according to prior art.

Figure 3 schematically illustrates a cell overlap situation where user equipment of a cellular wireless communications system is capable of detecting signals of more than one cell.

Figure 4 schematically illustrates a situation of cell surface coverage change according to the invention.

Figure 5 illustrates schematically how reference signal power is determined for one example embodiment of the invention.

Figure 6 displays reference signal power management according to an embodiment of the invention where a cell is requested to change its reference signal transmission power.

Figure 7 shows a signaling diagram according to an embodiment of the invention.

Figure 8 illustrates a basic block diagram of an example apparatus embodied in accordance with the invention.

**Detailed description**

A cell specific reference signal on the downlink provides for measurement for options of mobility management, channel estimation utilized for demodulation, location estimation, interference estimation, and more. Power setting of a cell specific reference signal shall provide good received signal strength throughout a designed cell area of service coverage in a cellular communication system. Appropriately setting of reference signal power is very important for efficient wireless resource management. E.g., too small reference signal power may result in coverage holes, and too large power of reference signal may cause inter-cell interference.

In this specification, EPRE ('Energy Per Resource Element') refers to power allocation to channel resource elements, e.g. a channel resource segment in a duplexing domain - such as time, frequency, code or combination thereof. In e.g. LTE, the transmit power is allocated to a time-frequency grid. Similar to the case of P-CPICH in WCDMA, an assigned value of transmitted EPRE made known to UE or its serving base station facilitates channel evaluation or other channel-related measurements, also for channels of neighboring cells. Further, EPRE for reference signal power is part of a cell's (or corresponding base station's) total transmit power. When transmit power is limited, available power for reference signal and data transmission need be balanced.

Subscriber density and traffic tend to increase over time in a network being appreciated by its users. To provide requested capacity, new base stations or sites may then be needed. In principle, the network need then be re-planned for configured power levels to provide good coverage, traffic capacity and user experience. In a network with great many cells, such re-planning is not a trivial task. It becomes even more complicated if users are allowed to add cells, or cells are turned on or off intermittently. Particularly in Self-Organized Networks, SONs, self-tuning should then be performed on a local base-station level in a network hierarchy to be capable of both detecting network changes and adjusting for them with minimum network overhead loading.

Preferred embodiments of the invention identify the importance of and benefits from base station capability and awareness - or considering equipment serving a particular cell, cell awareness - of changes of reference signal power or ERPE in neighboring cells/base stations. Explicit utility examples are provided illustrating service advantages of a cellular system due to improved control of

- interference level;

- service area coverage;

- load level; and/or

- communication quality.

The process of transferring a connection from being carried by one (or more) wireless link(s) to another wireless link (possibly keeping some of the old ones) is known under the name of handover or hand-off, HO. A handover discipline allowing for two or more simultaneous links to carry a connection is referred to as soft or softer handover. When there is exactly one wireless link carrying the connection before and after the transfer, and no two or more wireless links carrying the connection simultaneously, the handover is known as hard handover. Due to the one-link property, during a very short switching period, there is normally no wireless link carrying the connection, and there is need for buffering of data not to lose information due to handover.

In a wireless communications network, handover is one integral part of mobility management, keeping track of user devices being moved around or served by different cells at different times, and wireless link management, allocating wireless communication resources, such as radio frequency range or channels, time slots, codes or a combination thereof for various users' and network transmission purposes.

By the notion of a neighbor cell is referred to a cell served by a base station of which the broadcast signal for the neighbor cell can be received by a user equipment device while the device is camping on another cell served by a base station, also referred to as a serving cell. For some access technologies, such as GSM and UMTS, the neighbor cell could alternatively refer to a cell included in a particular neighbor cell list provided from a system configuration server. The scope of the concept of neighbor cell within this patent specification includes both. Though, for a particular network, operating frequency and access technology, one of them applies as should be apparent for an actual network and access technology.

An example embodiment of the invention identifies the importance of and benefits from awareness of changes of interference level in neighboring cells/base stations.

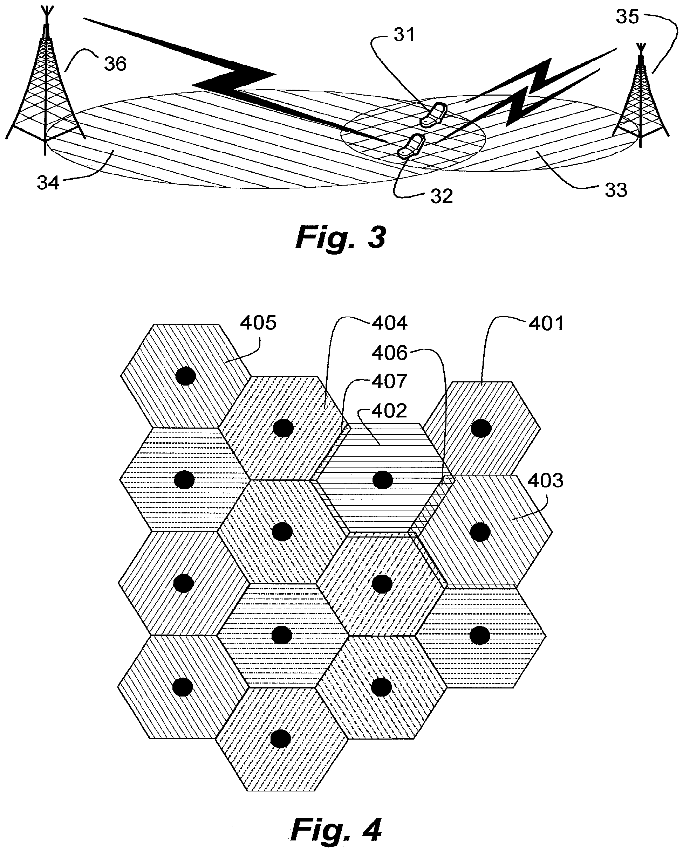

As a non-exclusive example with reference to figure 3, consider user equipment (31) in right-hand cell (33) being served by right-hand base-station (35), the user equipment (31) experiencing high interference levels or received signals at least in some resource elements. When scheduling other user equipment (32) to particular channel resources of a neighbor cell, it is in some cases important for, e.g., uplink ICIC ('Inter-Cell Interference Control') scheduler of left-hand cell (34) served by left-hand base-station (36) to avoid scheduling the other user equipment (32) to those at least some channel resource segments already of high interference level in the right-hand cell (33). For the ICIC to know the relevance of avoiding such scheduling, there is need for an estimate of UE (32) distance to base station (35) of cell (33) where user equipment (31) is experiencing interference problems. This may be estimated from received strength of signals received from right-hand base station (35) in user equipment (32) providing measurement reports to its serving base station (36). For this measurement report to provide such information, its serving left-hand base-station need know the power-level of the neighbor base-station (35). The provided information combined with power levels of the serving base station then may indicate to the serving base station both geographical coverage of neighboring and serving cells and position of user equipment. To avoid loading air-interface(s) between UE and base station(s), this level is preferably reported over an interface between base stations (35), (36) different from the interface between UE (31) and base station (35). Now, if transmit power of a base station (35) changes intermittently, this change need be communicated upon power change to enable such estimation in the other base station(s) (36).

This change of power level is different from e.g. the power balancing of WCDMA enabled by transfer of P-CPICH as described in relation to 3GPP TS 25.423 (see background section on page 11) and 3GPP TS 25.214 (see background section on page 12). For WCDMA relying upon soft handover, all cells included in an active set receive the same TPC ('Transmit Power Control') commands from UE. The TPC commands provide incremental control information indicating the cell to increase or decrease transmit power. When there are two or more links included in an active set, despite same TPC command is sent for the links not the same TPC commands are necessarily received and after a while, different links supposed to have same transmit power actually transmit at different power. Transmit power imbalances in soft handover reduce downlink macro-diversity gain, increase downlink interference and decrease capacity, and therefore, need be compensated for. In contrast, reducing or increasing reference signal transmission power level, or corresponding value, in a communications system relying upon hard handover according to a preferred embodiment of the invention facilitates e.g. transfer of some traffic load close to cell border(s) to other cells as further explained below (see page 20).

Further, embodiments of the invention identifies the importance of and benefits from awareness of changes of coverage in neighboring cells/base stations. In case a base station changes (e.g. reduces) reference signal transmit power, or turns off, neighboring cells are preferably arranged to cover the coverage deficiency (hole), at least partially, that would otherwise possibly entail. This is e.g. achieved by tilting of transmit antennas or increasing of reference signal power. The power compensation preferably is applicable both for reference-signal power increase and decrease thereby making it possible to adjust or fine-tune network coverage.

Consequently, example embodiments of the invention are capable of solving two issues at once or similarly. First, knowledge of reference signal transmit power as a product of coordinated or negotiated setting facilitates estimation on amount of load that may be transferred from its impact on (wireless propagation-wise) distance estimation. Second, coordinated or negotiated reference-signal transmit power provides a means to actually transfer the load as desired or estimated.

Within a wireless coverage range of a cell, user equipment is monitoring a number of downlink common channels or broadcast channels, used e.g. for signaling. Communication and monitoring of a single reference signal transmit power level for coordinated or negotiated reference-signal transmit power provides advantages to e.g. distributing and coordinating transmit power levels of each of a plurality of downlink common channels and broadcast channels one by one while safeguarding coverage for monitoring by UE within the coverage range. This can typically be achieved by applying one or more scaling factors or additive offsets (in linear or logarithmic scale) for the downlink common channels with the reference signal transmit power level as reference, where the scaling factors or additive offsets may be different for different downlink common channels or in different proportions for different intervals of reference signal transmit power range. Thereby, the further advantage is achieved that a problem experienced for a downlink common or broadcast channel could be solved by triggering coordinated adjustment of the reference signal transmit power.

Figure 4 schematically illustrates an example situation for a network as of figure 1. Of course, the coverage in figure 4 (as well as in figure 1) is much simplified for purpose of illustration. E.g., there are normally no sharp edges in real antenna coverage patterns and the illustrated hexagonal structure is due to approximations of ideal circular footprint of an omni-directional base station. Therefore, when the figure illustrates cells (402, 403) of extended radii, while still being hexagonal, this barely corresponds to a coverage pattern based on received signal strength as such. The figure included does illustrate how the invention as embodied in this example provides a means to compensate for a reduced RSRP ('Reference Signal Received Power') in one cell (401) by increase of RSRP in proximate cells (402, 403) when they have free capacity available. The reference signal in LTE is similar to the pilot in WiMAX. An example reason for reducing coverage area (or equivalently radius) of this cell (403) is the cell being heavily loaded as described above. When the nearby cells (402, 403) increase their coverage, they will also expand their coverage (406, 407) towards other cells (403, 404) in the example as illustrated in figure 4. Thereby, interference situation may be impacted in a cell (405) at a distance further away from the primary adjusting cells (401-403), depending on the distance at which channels are repeated. E.g., users in the distant cell (405) may after the power increase in a compensating cell (402, 403) experience greater interference level. User equipment in a geographical area (406, 407) earlier corresponding to another cell (404, 402) may come electrically closer to the interfered cell (405) after the power adjustment of cells (402, 403) while camping on any of these cells (402, 403) without handover to the next (404, 402) cell being initiated due to increased received signal level as compared to the case before the reference signal power adjustment of the primary adjusting cells. This secondary interference impact may be compensated for by secondary data transmission power compensation of the interfered cell (405) or by appropriate channel allocation depending on channel interference status.

The load of a cell depends on number of active users of a cell and the telecommunications traffic of those users. To some lesser extent also inactive users are loading the cell they are camping on. The number of users per cell effectively depends on which users are allowed to camp on the various cells. By a UE camping on a cell, we refer to the UE being tuned to the reference signal of that cell for services as requested. The respective reference signal received power of different cells determines which cells are potential candidates to a particular UE for camping. Each cell controller, preferably included in, or arranged proximate to, each base station or Node B preferably has local processing means for determining power parameters in relation to e.g. its load status. Ideally, also other parameters may be considered for setting of reference signal power and the processing entity to provide a tentative decision including various parameters/aspects, such as mobility performance, out of service problems, throughput at cell border and total network capacity. The various parameters are then preferably provided specific weights according to e.g. service or operator preferences. By increasing reference signal power of a cell, users otherwise camping on neighboring cells will be capable of receiving the reference signal and thereby consider the corresponding cell for camping, whereby load will be (re)distributed between cells.

As mentioned above, base stations usually have a total power limitation. For being cost efficient, there are base stations of different transmission power capabilities, and usually base stations of low transmit power can be produced for less than base station of high transmit power. Also base stations usually operate more efficiently in terms of output transmit power in relation to input power supplied when operating close to its designed operating power, than for an actual transmit power much less than that, thereby improving energy efficiency. Consequently, there is reason not to deploy a network of greater transmit capability than useful.

As already mentioned, since reference signal power forms part of total transmit power; when allocating more transmit power, there is less power available for data communications provided a limited total transmit power. Consequently, when reference signal power is reduced, there will be more transmit power available for data communication and hence communication quality for user equipment camping on the cell. Not at least for heavily loaded cells, communication quality should be considered in relation to coverage. Though particularly for moving user equipment, smaller coverage area usually results in frequent handover decisions involving associated signaling also loading the cell and affecting communication quality.

To provide for communication quality becomes even more important in a system relying on hard handover and where soft handover or macro-diversity is not available for remedying a coverage deficiency situation. While for WCDMA a (e.g. heavily loaded) cell being excluded from an active set might only marginally impact communication quality due to other cells being included in the active set, for GPRS data over GSM or LTE connections relying upon hard handover, exclusion from, or turning-off of, a (e.g. heavily loaded) cell possibly terminates the connection unless there is another cell available for (hard) handover of the connection. In this context, by soft handover we refer to connections involving communication links to more than one cell, where the cells involved need not cover unique or disjoint geographic areas. Even if hard handover may appear seamless due to well-prepared handover decisions, the preparations involving more than one cell, and rapid switching of connections from one cell to another, a particular connection between user equipment and base station is carried by a single communications link at any given particular point in time.

In order to improve network performance, preferably there is a network performance prediction entity for each cell controller including, at least implicitly, predicted network performance for any particular parameter setting, where reference signal is included among the parameters. In an example realization, such a(n) (implicit) prediction is based on statistics collected on own and neighbor base station parameters. The prediction entity preferably learns such a statistical relationship dynamically by e.g. including estimated path losses or interference levels based on collected measurement data from user equipment. For the prediction, such receiving end measurements are compared to transmitting end parameters, e.g. base station transmitted reference signal power. When base station one or more transmission parameters may change dynamically, this need be communicated efficiently to neighboring one or more base stations.

As explained in the prior art section, reference signal power is a configuration parameter typically configured by OAM ('Operations, Administration, and Maintenance'), or at least that has been the case until now. Consequently, the level of the reference signal power has not frequently changed and/or been communicated from/requested by a central system upon centrally initiated change/reconfiguration. Also, as explained above, the reference signal power distinguishes from transmission power allocated for communications payload and as further described above may actually correlate negatively or reversely to each other, so that reference signal power need decrease while communications transmission power need increase or, in another situation, transmission power need decrease while reference signal power need increase. This does not exclude that reference signal power is determined locally according to a local cell controller in e.g. a self-organizing network.

As a means of further improvements considering aspects such as control of interference level, service area coverage, load level and/or communication quality, embodiments of the invention benefit from reference signal power being exchanged between base stations without loading a user equipment - base station interface, and reference signal power change of base stations being coordinated between base stations. It is noted in particular that relying upon a user equipment - base-station interface frequently involves two or more user equipment - base-station interface(s) as follows. With reference to figure 3, there are only two cells (33, 34) illustrated whereas, for each serving cell, there are usually a plurality of neighboring cells, each providing an 'interface' to any user equipment in terms of broadcast or multicast channel information. Consequently, if all cells are required to e.g. broadcast information on transmit power level, first there is a load in terms of overhead spent on the broadcast channel, and that need be intercepted by a user equipment served by another cell, and second there is a load on the uplink user equipment - serving base-station interface for the user equipment to relay such broadcast information, since it cannot be taken for granted that same broadcast information, destined for user equipment, can be detected directly at the serving base station, while being received by a user equipment device. Preferred embodiments of the invention communicate reference signal power level(s) or changes thereof between cells (or corresponding base station(s) serving the cells) over a base-station - base-station interface. This, however, does not exclude that reference signal power is communicated over another interface, or over an OAM network element, while being triggered or determined locally.

Below, some non-exclusive example modes or events follow that may trigger exchange of reference signal transmit power and/or coordination of the reference signal power transmit level.

- base-station - base-station interface (e.g. X2 interface in E-UTRAN or R8 interface in WiMAX) setup;

- detection of new neighbor cell;

- interference level increase/decrease;

- service area coverage requirement;

- load level increase/decrease; and/or

- communication quality requirement.

When a base-station - base-station interface is setup, e.g. due to a base station earlier turned off later turns on, this base station newly turned on preferably initiates a requesting phase to swiftly collect reference signal transmit power from the various base station(s) serving neighboring one or more cells. The newly turned-on base station detects neighbors from, e.g., received PCI ('Physical Cell Identity') or other cell identity information received, typically since turned on and connected to the cellular system. PCI is a relatively compactly represented Identity, used in E-UTRAN. CGI ('Cell Global Identity') and ECI ('E-UTRAN Cell Identity') are other non-exclusive cell identities. The invention is not limited to a particular cell identity or other particular means for detection of new cells. Also, the base stations serving cells neighboring the one or more cells of the newly turned-on base station may detect the newly turned-on base station from cell identity information received, the detection triggering request of reference signal power level information from the newly turned-on base station. These two events are non-exclusive in the sense that both preferably are allowed and dealt with in a mobile communications system.

Of course, power turn-on or base-station - base-station interface setup are not the only reasons for detecting neighboring cells not earlier detected. Other reasons may be changes in the environment or that user equipment with other sensitivity of range capabilities come camping on a cell.

At occasions when a prediction or estimation entity, or measurement data, indicates e.g. interference level, service area coverage, load level and/or communication quality to be out of range, neighbor reference signal transmit power level preferably should be known by the base station for the estimation/prediction, when preferably local processing means determine power parameters of a reference signal power change to be relevant to achieve an improvement, and operate within range. Though if the power level is not known, there is reason for requesting a corresponding information signal also in such a situation.

As an alternative to base stations pulling (or polling) information on reference signal transmit power level from its neighbors, a base station, such as a newly turned-on base station may also push information on a default reference signal power to its neighbors as detected, e.g. event-driven or on an interrupt basis. A drawback of a pull discipline is that for the example case of a single newly turned-on base station in an existing network topology of (up and running) base stations, for the newly turned-on cell/base station there are a lot of neighbors to identify and collect information signaling from whereas for existing (up and running) neighboring base stations there is only one new base station to detect. To minimize identity collection, push and pull disciplines applied by base-stations detecting a new cell identity provide an option to an information push-only or pull-only signaling discipline. The preferred discipline may also be different for already deployed cells/base stations operating at a particular established configuration, now being in the need of a change and a newly turned on base station. In addition to explicit push/pull disciplines, the invention also is capable of benefiting from what may be referred to as implicit push or pull disciplines, where the pulling is implicit by a cell announcing its existence preferably over an interface other than a base station - user equipment interface (e.g. base-station - base-station interface or base-station - OAM interface, thereby triggering a pulling of power level information from neighbor cells. The announcing preferably includes one or more parameters indicating cell identity, e.g. PCI, CGI or ECGI, normally transmitted over the air. Correspondingly, an implicit push discipline would preferably provide a candidate or default transmit power level combined with a transmit parameter value indicating cell identity, e.g. PCI, CGI or ECGI.

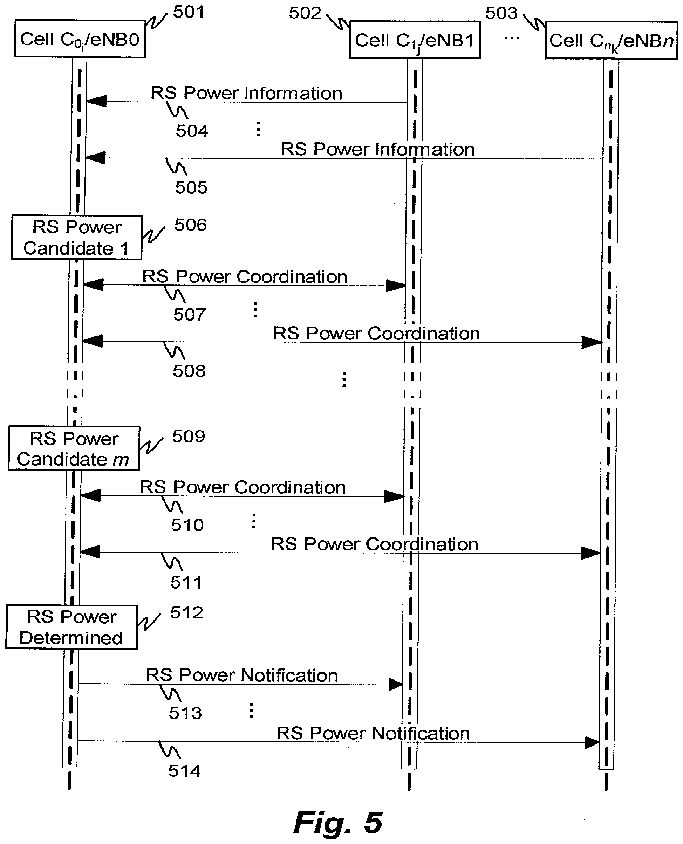

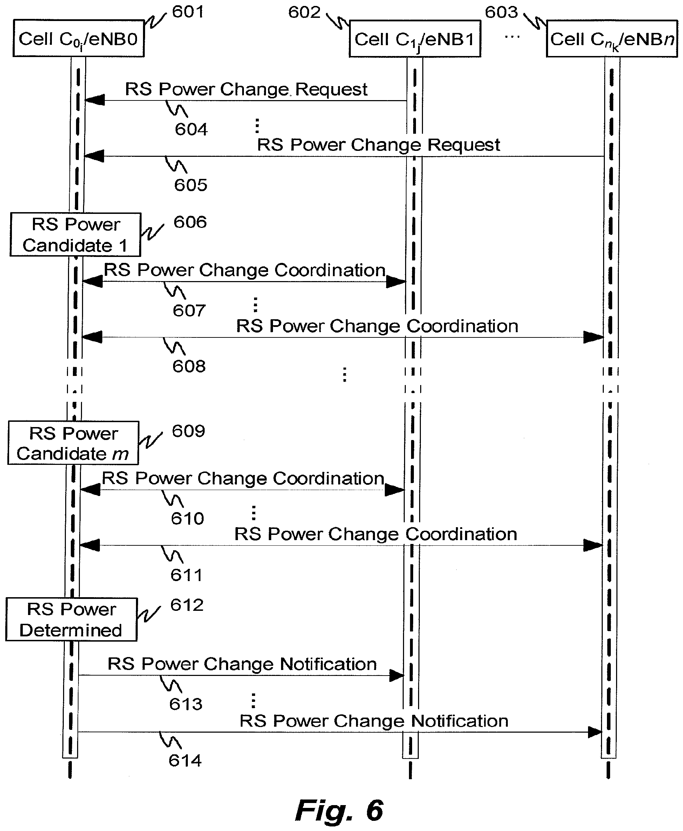

Figure 5 illustrates schematically how reference signal power, as a transmit parameter representative, is determined for one example embodiment of the invention according to an implicit pull discipline. A cell C0i (501), e.g. served by a recently turned-on base station, in the example represented by eNode B eNB0 (501) receives (504, 505) transmit power information signal from example cells C1j, served by base station represented by eNode B eNB1, (502) and possibly more cells up to and including cell Cnk , e.g. served by a base station represented by eNode B eNBn (503) in the example. Cell C0i (501) determines a first candidate reference signal adjusted transmission power (506) and initiates (507, 508) an information exchange signaling with the informing cells (502, 503). Including the feedback information, which in its simplest form is a plain positive or negative acknowledgment, ACK or NACK, represented by a single bit, the base station serving the cell C0i possibly determines (509) a second reference signal transmission power level. Of course, multilevel information feedback may provide a quality indicator or metric value or soft value approval at the expense of more bits or bit equivalents being communicated for each feedback signal. The process of information exchange signaling (506, 507, 508, 509) goes on until preferably the candidate setting is determined to have been approved in all cells C1j - Cnk (502, 503) that have been involved in or joined the information exchange, e.g. by a positive acknowledgement being received from all implicitly pulled base station(s), C1j - Cnk , or a predetermined time-out criterion is met. In the figure, m such rounds of information exchange, where m≥1, are indicated until a feasible reference signal power is determined (512). Meanwhile, the informing cells are possibly involved in a similar process (please also see figure 6, below) with other cells or with each other. In case introduction of cell C0i would not improve on overall network performance or even deteriorate performance, the procedure as described in relation to figure 5 e.g. facilitates prohibiting a launch of cell C0i (501) and preventing it from taking on any load, and in a preferred mode, the cell C0i (501) turning off its reference signal power until a later instant. Provided that cell C0i has not yet communicated any firm transmission power level, there should be no need to communicate it being turned off, even though it is not an excluded option. In case of a positive decision, a notification signal of determined reference signal power level will preferably be communicated (513, 514) to all the cells C1j - Cnk (502, 503) that have been involved in or joined the information exchange.

Figure 6 refers to an embodiment of the invention, according to an explicit or implicit push discipline, where a cell C0i (601) is requested (604, 605) to increase or decrease its reference signal transmission power, as a transmit parameter representative, from example neighbor cells, C1j - Cnk, (602, 603) served by base stations similar to previous explanations in relation to figure 5. Processing means of requested cell C0i are instructed to provide (606) a candidate power change level according one or more request inputs (604, 605). Preferably, an RS Power Change Request signal (604, 605) indicates a power change direction up or down and optionally also step-size. Similar to the embodiment illustrated schematically in figure 5, one or more rounds (607, 608, 610, 611) of information exchange, possibly including further one or more candidate reference signal power levels (609), is preferred to facilitate service quality provisioning as required. A preferred signal of RS Power Change Notification (613, 614) to the requesting cells C1j - Cnk (602, 603) optionally includes one or more information elements of power change direction and possibly also step-size of change, or alternatively of an absolute RS transmit power level. In this context a requested non-zero power change is e.g. considered a disapproval of existing level and a request comprising no change a positive acknowledgement or approval. In the figure, m, such rounds of information exchange, where m≥1, are indicated until an adjusted reference signal power is determined (612) and the power change is preferably communicated (613, 614) to the requesting cells C1j - Cnk (602, 603).

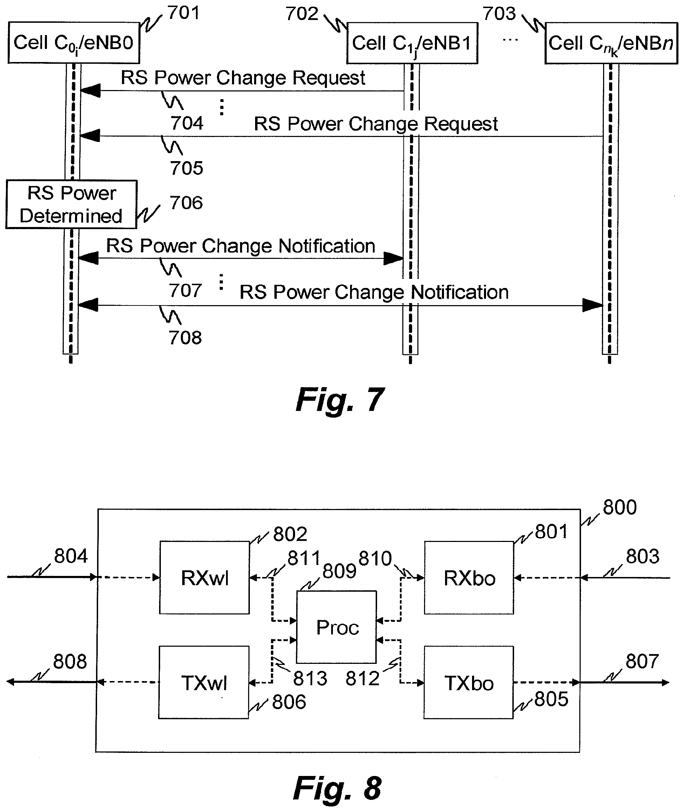

Figure 7 shows a signaling diagram according to an embodiment of the invention preferably implicitly pushing a candidate or default reference signal transmit power level, representing a transmit parameter value, to example cells C1j - Cnk (702, 703). If all related change notification is communicated implicitly or over an interface not involving a base station - user equipment interface, it provides an extension of the embodiments as described in relation to figures 5 and 6. For a cell C0i (701) transmitting at a particular reference-signal transmit-power level or pushing a default or candidate reference-signal transmit-power level, neighbor cells C1j - Cnk (702, 703) provide signaling of one or more RS Power Change Request messages (704, 705) to possibly change RS transmit power level of the cell (701) similar to the example RS Power Change Request message (604, 605) as described in relation to figure 6, e.g. for reasons as explained in detail above. An RS Power Change Request message comprising an information element of no change thereby typically comprises a confirmed or approved reference signal transmit power level and other RS Power Change Request messages a disapproved. Though particularly with multilevel indicators, also a message of some change could be considered an approval. The requested cell C0i (701) preferably determines (701) its reference-signal transmit-power level according to a predetermined rule for the coordinated reference signal transmit power level setting. Such a predetermined rule is, e.g., stored in a look-up table, as configured for an existing set of cells or determined in processing circuitry of base station equipment or associated equipment according to a network specific algorithm. Finally, the requested cell C0i (701) preferably notifies (707, 708) requesting cells C1j - Cnk (702, 703) of the corresponding RS power change determination (706).

An example advantage of coordinating/negotiating power changes is that power changes may be made in greater increments without causing system instability, and thereby faster convergence of reference signal power level is achieved than would otherwise be the case. E.g., X2 connections may suffer from significant transmission delay.

Backwards compatibility may provide a further advantage to networks including cells not (yet) implementing the invention and corresponding adjustments while still not risking unexpected power levels or coverage deficiencies. Example advantages of relying upon a base-station - base-station interface as compared to a base-station - OAM interface (for communication of transmit parameter value for wireless base-station - user equipment transmissions) are reduced network signaling, reduced signaling loop delay, and faster convergence. Though, depending on e.g. expected time-constant or degree of stationarity of load variations, both interfaces have their merits and do not load base-station - to user equipment interface and interface preference may be traded e.g. for interface load.

Figure 8 illustrates a basic block diagram of an example apparatus (800), such as a base station or corresponding device, embodied in accordance with the invention. Receive circuitry RXbo, (801) preferably of a base-station - base-station interface or a base-station - OAM interface is arranged for receiving signals according to standardized signaling format as legibly detected by processing circuitry, Proc, (809) of the device. Even if preferably communicated over a base-station - base-station interface, this does not exclude that at least some of the signaling may occur over a wireless interface involving additional receive circuitry adapted for communications over a base-station - user equipment interface or combined receive circuitry (801, 802) for communicating over both interfaces. In either case, the receive circuitry (801, 802) is connected (810, 811) to the processing circuitry for information exchange of received signals, where the dominating or even sole information flow is in direction from the receive circuitry (801, 802) to the processing circuitry (809). The processing circuitry preferably comprises a microprocessor or other programmable processing equipment, such as DSP ('Digital Signal Processor') receiving instructions as programmed and executing them accordingly. The processing circuitry is accordingly arranged to e.g. detect received one or more signals for (neighbor) cell information or acknowledging (positively or negatively) feedback signaling of input signals (803, 804). The processing circuitry according to one mode preferably also is arranged to determine a transmit parameter value, such as reference signal transmit power level, or a temporary candidate transmit parameter value for coordination with apparatuses of other cells, upon reference signal transmit power level input (803, 804) from the other corresponding apparatuses operating according to a same or different mode. According to a preferred mode, the processing circuitry is arranged to determine more than one candidate transmit parameter value conditionally on feedback signaling as received at the input (803, 804) from other corresponding apparatuses. These other apparatuses provide feedback upon signals as transmitted by the apparatus's (800) transmit circuitry (805, 806). The transmit circuitry is preferably arranged as transmit circuitry for a user-equipment - base station interface (806) and a base-station - base-station or base-station - OAM interface (805), respectively, similar to the case for the receive circuitry. Also the transmit circuitry (805, 806) is connected (812, 813) with the processing circuitry (809) and distributes signaling information elements as provided by the processing circuitry (809) and preferably allows for bidirectional handshaking (812, 813) between processing circuitry and transmit circuitry. According to a preferred mode, the processing circuitry is arranged to prepare a particular notification information element upon positive feedback from apparatuses involved in a particular transmit parameter value setting and as thereupon has been determined by the processing circuitry (809). Upon a negative feedback, the same mode provides a candidate transmit parameter value or terminates the exchange in case of a time-out criterion. Information elements upon both types of feedback are included in signaling (807, 808) provided by the transmit circuitry (805, 806).

It should be noted that not all features, such as of different operating modes, of the receive circuitry, transmit circuitry or processing circuitry as described in relation to figure 8 are necessarily required for a particular apparatus participating in a particular exchange of transmit parameter value signaling. Though, in the above description in relation to figure 8, features have been included for the apparatus to be capable of exchanging its role in a communication of transmit parameter value of a transmit parameter of its own/its corresponding cell/base station or of another apparatus/cell/base station and thereby be capable of operating both-ways, even if scope of invention includes apparatuses also being capable of operating only one-way.

Various units of block diagrams or schematic diagrams representing active communication equipment comprise processing circuitry. Processing equipment includes hardware or software, not excluding both hardware and software. The respective processing equipment of various units preferably operates according to one or more computer program products stored in storage means of the various units or of one or more connected units for storage.

In this description, certain acronyms and concepts widely adopted within the technical field have been applied in order to facilitate understanding. The invention is not limited to units or devices due to being provided particular names or labels. It applies to all methods and devices operating correspondingly. This also holds in relation to the various systems that the acronyms might be associated with.

While the invention has been described in connection with specific embodiments thereof, it will be understood that it is capable of combining the various embodiments, or features thereof, as well as of further modifications. This specification is intended to cover any variations, uses, adaptations or implementations of the invention; not excluding software enabled units and devices, processing in different sequential order where non-critical, or mutually non-exclusive combinations of features or embodiments; within the scope of subsequent claims following, in general, the principles of the invention as would be obvious to a person skilled in the art to which the invention pertains.

**Claims**

1. A method of communication of a transmit parameter value for wireless transmissions to user equipment in a wireless cellular communications system comprising a first (501) and a second cell (502), each cell served by a base station, the method comprising the steps of:

   exchanging (504) information signaling on the transmit parameter value or change thereof over a base-station - base-station interface in a first signal communication between the first (501) and second (502) cells until a candidate setting is determined which is approved by the second cell (502), and
   setting (513) the transmit parameter value or change thereof in the first cell (501) based on the setting approved by the second cell (502),

   wherein the wireless cellular communications system employing hard handover; and
   wherein the transmit parameter value is a reference signal transmission power level.

2. The method of communication according to claim 1, wherein the transmit parameter value or change thereof is approved by the second cell (502) in acknowledgement signaling.

3. The method of communication according to claim 1, wherein the transmit parameter value or change thereof is finally set in the first cell (501) or base station serving the first cell (501).

4. The method of communication according to claim 1, wherein the transmit parameter value or change thereof as finally set is notified to the second cell (502) through signaling.

5. The method of communication according to claim 4, wherein the notification is conditional upon the transmit parameter value or change thereof as finally set being approved in all neighbor cells of the first cell (501).

6. The method of communication according to claim 1, wherein the transmit parameter value or change thereof is disapproved by the second cell (502) in acknowledgement signaling.

7. The method of communication according to claim 1, wherein the information signaling exchange on cell transmit parameter value is initiated by information signaling on a corresponding transmit parameter value being provided from the second cell (502).

8. The method of communication according to claim 1, wherein the setting of the transmit parameter value or change thereof is coordinated, over the base-station - base-station dedicated interface.

9. The method of communication according to claim 1, wherein the first (501) and second cells (502) are neighbor cells to each other.

10. The method of communication according to claim 9, wherein the exchange of information signaling on cell transmit parameter value or change thereof is initiated upon detection in the second cell (502) of neighbor cell information on the first cell (501).

11. The method of communication according to claim 9, wherein the information on cell transmit parameter value or change thereof enables the neighbor cell to determine or estimate user equipment distance from the base station serving the first cell (501).

12. The method of communication according to claim 1, wherein the exchange of information signaling on cell transmit parameter value or change thereof is initiated based upon at least one of

- base-station - base-station interface setup;
- detection of new neighbor cell;
- interference level increase/decrease;
- service area coverage requirement;
- load level increase/decrease; and
- communication quality requirement.

13. An apparatus of communication of a transmit parameter value for wireless transmissions to user equipment in a wireless cellular communications system, the apparatus being adapted to perform a method according to any of claims 1 to 12.

**Patentansprüche**

1. Verfahren zur Kommunikation eines Übertragungsparameterwerts für drahtlose Übertragungen zu einem Anwendergerät in einem drahtlosen zellulären Kommunikationssystem, das eine erste (501) und eine zweite Zelle (502) umfasst, wobei jede Zelle durch eine Basisstation versorgt wird, wobei das Verfahren die folgenden Schritte umfasst:

Austauschen (504) von Informationssignalisierung über den Übertragungsparameterwert oder dessen Änderung über eine Basisstation-Basisstation-Schnittstelle in einer ersten Signalkommunikation zwischen der ersten (501) und der zweiten (502) Zelle, bis eine Kandidateneinstellung bestimmt ist, die durch die zweite Zelle (502) akzeptiert ist, und
Einstellen (513) des Übertragungsparameterwerts oder dessen Änderung in der ersten Zelle (501) basierend auf der Einstellung, die durch die zweite Zelle (502) akzeptiert ist, wobei das drahtlose zelluläre Kommunikationssystem harte Übergabe einsetzt; und
wobei der Übertragungsparameterwert ein Referenzsignalübertragungsleistungspegel ist.

2. Verfahren zur Kommunikation nach Anspruch 1, wobei der Übertragungsparameterwert oder dessen Änderung durch die zweite Zelle (502) in einer Quittungssignalisierung akzeptiert wird.

3. Verfahren zur Kommunikation nach Anspruch 1, wobei der Übertragungsparameterwert oder dessen Änderung endgültig in der ersten Zelle (501) oder der Basisstation, die die erste Zelle (501) versorgt, eingestellt wird.

4. Verfahren zur Kommunikation nach Anspruch 1, wobei der Übertragungsparameterwert oder dessen Änderung als endgültig eingestellt der zweiten Zelle (502) über Signalisierung gemeldet wird.

5. Verfahren zur Kommunikation nach Anspruch 4, wobei die Meldung dadurch bedingt ist, dass der Übertragungsparameterwert oder dessen Änderung als endgültig eingestellt in allen Nachbarzellen der ersten Zelle (501) akzeptiert ist.

6. Verfahren zur Kommunikation nach Anspruch 1, wobei der Übertragungsparameterwert oder dessen Änderung durch die zweite Zelle (502) in einer Quittungssignalisierung nicht akzeptiert wird.

7. Verfahren zur Kommunikation nach Anspruch 1, wobei der Informationssignalisierungsaustausch über den Zellenübertragungsparameterwert durch Informationssignalisierung über einen entsprechenden Übertragungsparameterwert, der durch die zweite Zelle (502) bereitgestellt wird, initiiert wird.

8. Verfahren zur Kommunikation nach Anspruch 1, wobei das Einstellen des Übertragungsparameterwerts oder dessen Änderung über die dedizierte Basisstation-Basisstation-Schnittstelle koordiniert wird.

9. Verfahren zur Kommunikation nach Anspruch 1, wobei die erste (51) und zweite (502) Zelle Nachbarzellen zueinander sind.

10. Verfahren zur Kommunikation nach Anspruch 9, wobei der Austausch von Informationssignalisierung über den Zellenübertragungsparameterwert oder dessen Änderung nach der Detektion in der zweite Zelle (502) von Nachbarzelleninformationen über die erste Zelle (501) initiiert wird.

11. Verfahren zur Kommunikation nach Anspruch 9, wobei die Informationen über den Zellenübertragungsparameterwert oder dessen Änderung der Nachbarzelle ermöglichen, einen Anwendergeräteabstand von der Basisstation, die die erste Zelle (501) versorgt, zu bestimmen oder zu schätzen.

12. Verfahren zur Kommunikation nach Anspruch 1, wobei der Austausch von Informationssignalisierung über den Zellenübertragungsparameterwert oder dessen Änderung basierend auf wenigstens einem des Folgenden initiiert wird:

Basisstation-Basisstation-Schnittstellen-Aufbau;
Detektion einer neuen Nachbarzelle;
Störpegel-Anstieg/Abnahme;
Versorgungsbereichsabdeckungsanforderung;
Lastpegel-Anstieg/Abnahme; und
Kommunikationsqualitätsanforderung.

13. Vorrichtung zur Kommunikation eines Übertragungsparameterwerts für drahtlose Übertragungen zu einem Anwendergerät in einem drahtlosen zellulären Kommunikationssystem, wobei die Vorrichtung ausgelegt ist, ein Verfahren nach einem der Ansprüche 1 bis 12 auszuführen.

**Revendications**

1. Procédé de communication d'une valeur paramétrique d'émission de transmissions sans fil à un équipement utilisateur dans un système de communications cellulaires sans fil comprenant une première cellule (501) et une seconde cellule (502), chaque cellule étant desservie par une station de base, le procédé comprenant les étapes consistant à :

échanger (504) une signalisation d'informations sur la valeur paramétrique d'émission ou un changement de celle-ci sur une interface station de base-station de base dans une première communication de signaux entre la première cellule (501) et la seconde cellule (502) jusqu'à ce qu'un réglage possible approuvé par la seconde cellule (502) soit déterminé, et
régler (513) la valeur paramétrique d'émission ou son changement dans la première cellule (501) en fonction du réglage approuvé par la seconde cellule (502),
dans lequel le système de communications cellulaires sans fil emploie un transfert intercellulaire avec coupure ; et
dans lequel la valeur paramétrique d'émission est un niveau de puissance d'émission de signal de référence.

2. Procédé de communication selon la revendication 1, dans lequel la valeur paramétrique d'émission ou son changement est approuvé(e) par la seconde cellule (502) dans une signalisation d'acquittement.

**3.** Procédé de communication selon la revendication 1, dans lequel la valeur paramétrique d'émission ou son changement est finalement réglé(e) dans la première cellule (501) ou la station de base desservant la première cellule (501).

**4.** Procédé de communication selon la revendication 1, dans lequel la valeur paramétrique d'émission ou son changement tel que finalement réglé est notifié(e) à la seconde cellule (502) par le biais d'une signalisation.

**5.** Procédé de communication selon la revendication 4, dans lequel la notification est tributaire de l'approbation de la valeur paramétrique d'émission ou de son changement tel que finalement réglé(e) dans toutes les cellules voisines de la première cellule (501).

**6.** Procédé de communication selon la revendication 1, dans lequel la valeur paramétrique d'émission ou son changement est désapprouvé(e) par la seconde cellule (502) dans une signalisation d'acquittement.

**7.** Procédé de communication selon la revendication 1, dans lequel l'échange d'une signalisation d'informations sur la valeur paramétrique d'émission cellulaire est lancé par une signalisation d'informations sur une valeur paramétrique d'émission correspondante fournie par la seconde cellule (502).

**8.** Procédé de communication selon la revendication 1, dans lequel le réglage de la valeur paramétrique d'émission ou de son changement est coordonné, sur l'interface station de base-station de base dédiée.

**9.** Procédé de communication selon la revendication 1, dans lequel la première cellule (501) et la seconde cellule (502) sont des cellules mutuellement voisines.

**10.** Procédé de communication selon la revendication 9, dans lequel l'échange d'une signalisation d'informations sur la valeur paramétrique d'émission cellulaire ou son changement est lancé à la détection dans la seconde cellule (502) d'informations de cellule voisine relatives à la première cellule (501).

**11.** Procédé de communication selon la revendication 9, dans lequel les informations sur la valeur paramétrique d'émission cellulaire ou son changement permettent à la cellule voisine de déterminer ou d'estimer une distance d'un équipement utilisateur par rapport à la station de base qui dessert la première cellule (501).

**12.** Procédé de communication selon la revendication 1, dans lequel l'échange d'une signalisation d'informations sur la valeur paramétrique d'émission cellulaire ou son changement est lancé lors d'au moins l'un :

- d'une configuration d'interface station de base - station de base ;
- d'une détection d'une nouvelle cellule voisine ;
- d'une augmentation/diminution de niveau de brouillage ;
- d'une exigence de couverture de zone de desserte ;
- d'une augmentation/diminution de niveau de charge ; et
- d'une exigence de qualité de communication.

**13.** Appareil de communication d'une valeur paramétrique d'émission de transmissions sans fil à un équipement utilisateur dans un système de communications cellulaires sans fil, l'appareil étant adapté pour exécuter un procédé selon l'une quelconque des revendications 1 à 12.

**Fig. 1**

**Fig. 2**

EP 2 359 619 B1

**Fig. 3**

**Fig. 4**

*Fig. 5*

Cell $C_{0_i}$/eNB0    601

602    Cell $C_{1_j}$/eNB1    ···    603    Cell $C_{n_K}$/eNBn

RS Power Change Request

604

RS Power Change Request

605

RS Power Candidate 1    606

RS Power Change Coordination

607

RS Power Change Coordination

608

RS Power Candidate $m$    609

RS Power Change Coordination

610

RS Power Change Coordination

611

RS Power Determined    612

RS Power Change Notification

613

RS Power Change Notification

614

## Fig. 6

**Fig. 7**

**Fig. 8**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 03036815 A
- US 7162250 B
- US 2005265222 A
- WO 2004019538 A
- WO 2009065075 A
- EP 1406418 A1
- WO 2009120934 A1
- WO 2009022948 A1

**Non-patent literature cited in the description**

- **M.A.R. HAIDER ; A.B. BHATTI ; A.A. KIRMANI.** Radio Resource Management In 3G UMTS Networks. Blekinge Institute of Technology, November 2007
- **S. SHARMA ; A.R. NIX ; S. OLAFSSON.** Situation-Aware Wireless Networks. IEEE Communications Magazine, July 2003
- **S. SHARMA ; E. TAMEH ; A. MOLINA ; A.R. NIX.** Automated W-CDMA Microcellular Deployment and Coverage Reconfiguration based on Situation Awareness. IEEE VTC Spring, 06 May 2002
- **S. SHARMA ; A.R. NIX.** Situation Awareness Based Automatic Basestation Detection and Coverage Reconfiguration in 3G Systems. IEEE PIMRC, 2002
- **J.X. QIU ; J.W. MARK.** A Dynamic Load Sharing Algorithm Through Power Control in Cellular CDMA. IEEE PIMRC, 15 September 1998
- **A.G. SPILLING ; A.R. NIX.** An Introduction to Situation Aware Networks. IEEE VTC Spring, 15 May 2000
- **A.G. SPILLING ; A.R. NIX.** Performance enhancement in cellular networks with dynamic cell sizing. IEEE PIMRC, 18 September 2000
- **I. SIOMINA ; D. YUAN.** Optimization of Pilot Power for Load Balancing in WCDMA Networks. IEEE Globecom, 29 November 2004
- **A. AMPHAWAN ; E.M. ABRAHAM G.** Dynamic Cell Sizing in CDMA Networks. *Pakistan Journal of Information and Technology,* 2002